# EUROPÄISCHE PATENTSCHRIFT

(11) **EP 1 927 607 B1**
(45) Veröffentlichungstag und Bekanntmachung des Hinweises auf die Patenterteilung: **23.12.2009**
(21) Anmeldenummer: 07022734.3
(22) Anmeldetag: 23.11.2007
(51) Int. Cl.: C08G 18/18, C08G 18/63, C08F 283/00

(54) **Zweikomponenten-Polyurethan / Vinylester-Hybridschaumsystem und seine Verwendung als Flammschutzmaterial und Material zum Ausschäumen von Oeffnungen in Gebäuden**
Two-part polyurethane/vinyl ester hybrid foam system and its use as flame-retardant material and material for pour-and-set foam in openings in buildings
Polyuréthane à plusieurs composants / système de mousse hybride d'éther de vinyle et son utilisation en tant que matériau ignifuge et matériau de moussage d'ouvertures de bâtiments

(30) Priorität: 29.11.2006 DE 102006056401
(43) Veröffentlichungstag der Anmeldung: 04.06.2008
(73) Patentinhaber: HILTI Aktiengesellschaft, 9494 Schaan (LI)
(72) Erfinder: Reinheimer, Arne, 87660 Irsee (DE)
(74) Vertreter: Wildi, Roland

(56) Entgegenhaltungen:
- WO-A-94/14865
- US-A- 4 458 038
- US-A1- 2005 197 441
- DATABASE WPI Week 199334 Derwent Publications Ltd., London, GB; AN 1993-269848 XP002471688 & JP 05 186555 A (MITSUI TOATSU CHEM INC) 27. Juli 1993 (1993-07-27)

## Beschreibung

Die vorliegende Erfindung betrifft ein Zweikomponenten-Polyurethan/Vinylester-Hybridschaumsystem mit einer Polyol-Komponente (A), die mindestens ein Polyol, einen Katalysator für die Reaktion des Polyols mit dem Polyisocyanat, mindestens ein polymerisierbares Vinylmonomer, Wasser oder ein Treibmittel auf der Grundlage eines verdichteten oder verflüssigten Gases als Schaumbildner enthält, und einer Polyisocyanat-Komponente (B), die mindestens ein Polyisocyanat und einen Katalysator für die Polymerisation des Vinylmonomers enthält, sowie die Verwendung dieses Hybridschaumsystems als Flammschutzmaterial und Material zum Ausschäumen von Öffnungen, Kabel- und Rohrdurchführungen in Wänden, Böden und/oder von Gebäuden zum Zwecke des Brandschutzes.

Es ist bekannt, dass Polyurethan-Schaumsysteme zur Bildung der Polymermatrix von Bauschäumen und von Brandschutzprodukten eingesetzt werden können. So ist es üblich, beispielsweise Türen und Fenster von Gebäuden mit Hilfe eines solchen Bauschaums in den entsprechenden Öffnungen des Gebäudes zu montieren und beispielsweise Kabel- und Durchführungen in Wänden, Böden und/oder Decken von Gebäuden zum Zwecke des Brandschutzes unter Verwendung eines solchen Polyurethan-Schaumsystems auszuschäumen, um in dieser Weise im Brandfall einen Durchschlag des Feuers durch diese Öffnungen zu verhindern oder zu verzögern (siehe D. Klempner, K.C. Frisch, Polymeric Foams, Hanser Verlag (1991); DE 851 851; DE 860 109).

So zeigt WO 94/14865 A ein aufschäumbares 2-Komponenten-Polyurethanmaterial; hierbei ist die eine Komponente (A) eine im wesentlichen nur zwei Hydroxylgruppen pro Molekül aufweisende polymere Polyolkomponente und die andere Komponente (B) eine im wesentlichen bifunktionelle Isocyanat-Komponente.

JP 5-186555 A offenbart einen Polyurethanschaum aus einer mit einem Metallsalzmethacrylat modifizierten Polyolkomponente und einer Isocyanat-Komponente.

US 4 458 038 A zeigt ein Verfahren zur Herstellung einer Polymerdispersion durch Polymerisation eines ethylenisch ungesättigten Monomers in einer Polyolmischung und zur Herstellung eines Polyurethanschaums unter Verwendung der Polymerdispersion. Der Flammschutz erfolgt durch Zugabe von Flammschutzmitteln.

Eine wesentliche Aufgabe der Polymermatrix solcher Produkte, namentlich im Fall eines Brandschutzproduktes, ist es als Bindemittel für die eigentlichen Brandschutzadditive zu fungieren, beispielsweise ein intumeszierendes Material auf der Grundlage eines Säurebildners, einer Kohlenstoff-liefernden Verbindung und eines Gasbildners, Blähgraphit oder blähfähige Schichtsilikate, welche intumeszierende Materialien sich im Brandfall ausdehnen und dem Schaum ein grösseres Volumen und eine höhere Flammfestigkeit verleihen.

Die für solche Zwecke eingesetzten Polyurethan-Schaumsysteme umfasser in der Regel eine Polyol-Komponente und eine Polyisocyanat-Komponente, welche in Gegenwart eines Treibmittels, wie beispielsweise Wasser, miteinander reagieren unter Bildung eines Polyurethanschaums. Diese Polyurethanschäume können hart oder weich sein und diese Eigenschaften können, wie dem Fachmann bekannt ist, ohne weiteres durch entsprechende Modifizierung der Rezepturen eingestellt werden. Hinzuweisen ist hierzu auf D. Klempner et al., Polymeric Foams, Hanser Publishers, München (1991).

Die Anpassungen von solchen Polyurethan-Schaumsystemen im Zuge der Entwicklung einer Schaumrezeptur ist jedoch immer dann aufwendig, wenn beispielsweise die Rezeptur von einem Hartschaum auf einen Weichschaum oder umgekehrt umgestellt werden soll, da Weichschäume ein viel ausgeprägteres Schrumpfverhalten zeigen, welches es zu unterbinden gilt. Wünschenswert wäre deshalb, solche Polyurethan-Schaumsysteme bereitzustellen, die sich in der Rezeptur für einen härteren und einen weicheren Schaum nur marginal unterscheiden, so daß die gewünschten Schaumeigenschaften in Abhängigkeit von dem Kundenwunsch, beziehungsweise der Anwendungsanforderung, lediglich durch eine geringfügige Modifizierung der Rezeptur eingestellt werden können.

Es hat sich nun überraschenderweise gezeigt, daß sich die Härte eines Hybridschaumsystems auf der Basis von Polyurethan- und Vinylester-Komponenten durch Zugabe von mehrwertigen Metallen gezielt einstellen läßt, wenn die Formulierung mindestens ein mit dem mehrwertigen Metall einen Chelatkomplex bildendes, polymerisierbares Vinylmonomer enthält. Zur Härteeinstellung muß dann lediglich der Gehalt an dem mehrwertigen Metall in der Formulierung modifiziert werden, während die restlichen Formulierungsbestandteile unverändert bleiben können.

Gegenstand der Erfindung ist daher das Zweikomponenten-Polyurethan/Vinylester-Hybridschaumsystem nach Anspruch 1. Die Unteransprüche betreffen bevorzugte Ausführungsformen dieses Gegenstandes sowie die Verwendung dieses Hybridschaumsystems als Flammschutzmaterial und Material zum Ausschäumen von Öffnungen, Kabel- und Rohrdurchführungen in Wänden, Böden und/oder Decken von Gebäuden zum Zwecke des Brandschutzes oder aber auch als Bauschaum zur Befestigung von Fenstern, Türen und dergleichen in Gebäuden.

Die Erfindung betrifft somit ein Zweikomponenten-Polyurethan/Vinylester-Hybridschaumsystem mit einer Polyol-Komponente (A), die mindestens ein Polyol, einen Katalysator für die Reaktion des Polyols mit dem Polyisocyanat, mindesten ein polymerisierbares Vinylmonomer, Wasser oder ein Treibmittel auf der Grundlage eines verdichteten oder verflüssigten Gases als Schaumbildner enthält, und einer Polyisocyanat-Komponente (B), die mindestens ein Polyisocyanat und einen Katalysator für die Polymerisation des Vinylmonomers enthält, das dadurch gekennzeichnet ist, daß die Polyol-Komponente (A) mindestens eine Verbindung eines mehrwertigen Metalls und mindestens ein mit dem mehrwertigen Metall einen Chelatkomplex bildendes, polymerisierbares Vinylmonomer enthält.

Vorzugsweise enthält das Hybridschaumsystem mindestens ein mit dem mehrwertigen Metall einen mindestens dreizähnigen Chelatkomplex bildendes, polymerisierbares Vinylmonomer, wie vorzugsweise (2-Acetoacetoxy)-ethylmethylacrylat.

Mit Vorteil sind das mit dem mehrwertigen Metall einen Chelatkomplex bildende, polymerisierbare Vinylmonomer in einer Menge von 0,1 bis 50 Gew.-%, vorzugsweise 0,5 bis 40 Gew.-%., bezogen auf das Gesamtgewicht der Komponenten (A) und (B) und das mehrwertige Metall in zur Bildung des Chelatkomplexes äquimolarer Menge enthalten.

Als mehrwertiges Metall enthält das erfindungsgemäße Hybridschaumsystem vorzugsweise ein dreiwertiges Metall, welches sechsfach (oktaedrisch) koordiniert werden kann. Gemäß einer weiter bevorzugte Ausführungsform der Erfindung enthält das Hybridschaumsystem als mehrwertiges Metall dreiwertiges Eisen (Fe(III)), dreiwertiges Aluminium (Al(III)), dreiwertiges Chrom (Cr(III)), dreiwertiges Kobalt (Co(III)) und/oder dreiwertiges Ruthenium (Ru(III)).

Vorzugsweise wird das dreiwertige Metall im Hybridschaumsystem in Form von FeCl₃, AlCl₃, CrCl₃, Co(III)-acetylacetonat und/oder RuCl₃ zugesetzt.

Im Fall der erfindungsgemäß bevorzugten Verwendung von dreiwertigem Eisen in Form von beispielsweise FeCl₃, bildet sich in dem Hybridschaumsystem zusammen mit dem bevorzugten polymerisierbaren Monomer (2-Acetoacetoxy)-ethylmethacrylat der Chelatkomplex der folgenden Formel:

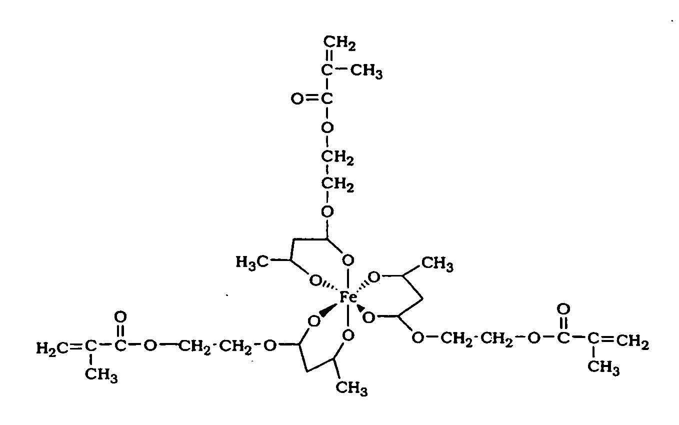

Bei der bestimmungsgemäßen Verwendung, das heißt der nach dem Vermischen der Polyol-Komponente (A) mit der Polyisocyanat-Komponente (B) und der darauf folgenden Bildung des Polyurethanschaums und der Polymerisation des Vinylmonomers wird der aus dem mehrwertigen Metall und dem polymerisierbaren Vinylmonomer gebildete Chelatkomplex, beispielsweise der obigen Formel, in das polymere Netzwerk des Hybridschaums einpolymerisiert, was zu einer Erhöhung der Vernetzungsdichte und damit zur Zunahme der Härte des Hybridschaums führt. Erfindungsgemäß wird also durch die unter Verwendung des mehrwertigen Metalls und des einen Chelatkomplex bildenden polymerisierbaren Vinylmonomers ein Komplex gebildet, der aufgrund seiner Vernetzungspunkte bei der radikalischen Polymerisation ein dreimensionales Polymernetzwerk bildet, das heißt einen Hartschaum. Erfindungsgemäß wird es also durch die einfache Modifizierung der Menge des mehrwertigen Metalls möglich, die Härte des gebildeten Hybridschaums gezielt einzustellen, ohne das es dafür erforderlich ist, die anderen Bestandteile des Hybridschaumsystems zu modifizieren.

Das erfindungsgemäße Hybridschaumsystem enthält gemäß einer bevorzugten Ausführungsform neben dem einen Chelatkomplex bildenden, polymerisierbaren Vinylmonomer als weitere polymerisierbare Vinylmonomeren einen Vinylester, der aus der Alkyl(meth)acrylate, Aryl(meth)acrylate. Hydroxyalkyl(meth)acrylate, (Meth)acrylamide, Ether-(meth)acrylate, mehrfunktionelle vernetzende (Meth)acrylate, Vinylesterurethanharze, alkoxylierte Bisphenol-A-di(meth)acrylate, alkoxylierte Bisphenol-F-di(meth)acrylate, (Meth)acrylsäure, (Meth)acrylsäureanhydrid und (Meth)acrylnitril umfassenden Gruppe ausgewählt ist.

Besonders bevorzugt sind als Vinylester Methyl(meth)acrylat, Ethyl(meth)acrylat, n-Butyl(meth)acrylat, Isobutyl(meth)acrylat, n-Hexyl-(meth)acrylat, 2-Ethylhexyl(meth)acrylat, Isodecyl(meth)-acrylat, Cyclohexyl(meth)acrylat, Isobornyl(meth)acrylat, Benzyl(meth)acrylat, 3,3,5-Trimethylcyclohexyl(meth)-acrylat, Isotridecyl(meth)acrylat, Stearyl(meth)acrylat, 2-Hydroxyethyl(meth)acrylat, Hydroxypropyl(meth)acrylat. 2-Dimethylaminoethylmethacrylat, 3-Dimethylaminopropyl(meth)acrylamid. 2-Trimethylammoniumethyl(meth)acrylatchlorid, 3-Trimethylammoniumpropyl(meth)acrylamidchlorid, 2-tert.-Butylaminoethyl(meth)acrylat, (Meth)acrylamid, N-Methylol(meth)acrylamid. N-Butoxymethyl(meth)acrylamid, Ethyltriglykol(meth)acrylat, Tetrahydrofurfuryl(meth)acrylat, Methoxypolyethylenglykol-350-(meth)-acrylat, Methoxypolyethylenglykol-500-(meth-acrylat, Methoxypolyethylenglykol-750-(meth)acrylat, Methoxypolyethylenglykol-1000-(meth)acrylat, (Meth)acrylsäureester ethoxylierter (25 mol EO) C₁₆ - C₁₈-Fettalkoholgemische, Butyldiglykol(meth)acrylat, Allyl(meth)acrylat, Ethylenglykoldi(meth)acrylat, Diethylenglykoldi(meth)acrylat, Triethylenglykoldi(meth)-acrylat, Tetraethylenglykoldi(meth)-acrylat. Polyethylenglykol-200-di(meth)acrylat, Polyethylenglykol-400-di(meth)acrylat, Polyethylenglykol-600-di(meth)acrylat, Polyethylenglykol-1000-di(meth)acrylat, 1,3-Butandioldi(meth)acrylat, 1,4-Butandioldi(meth)-acrylat, 1,6-Hexandioldi(meth)acrylat, 1,12-Dodecanidioldi(meth)acrylat, Glycerindi(meth)acrylat, Trimethylolpropantri(meth)-acrylat, Diurethandi-(meth)acrylat, Umsetzungsprodukte aus polyfunktionellem Isocyanat, gegebenenfalls mehrwertigem Alkohol und/oder gegebenenfalls mehrwertigem Amin und einem Hydroxylalkyl(meth)acrylat), ethoxyliertes (2 EO) Bisphenol-A-di(meth)acrylat, ethoxyliertes (10 EO) Bisphenol-A-di(meth)acrylat, (Meth)acrylsäure, (Meth)acrylsäureanhydrid, Maleinsäure-mono-2-(meth)acryloyloxyethylester, N-(2-(Meth)acryloyloxyethyl)-ethylenharnstoff. N-(2-(Meth)-acryloyl-oxyethyl)-ethylenharnstoff und Mischungen davon.

Die bei der chemischen Bezeichnung der oben genannten Vinylester angewandte Nomenklatur "...(meth)acrylat" bedeutet, daß sowohl die betreffende Methacrylatverbindung als auch die Acrylatverbindung umfaßt sein soll. Methyl(meth)acrylat steht also Methylmethacrylat und Methylacrylat. Entsprechendes gilt auch für die (Meth)acrylsäure-Derivate und (Meth)acrylamide.

Erfindungsgemäß ist es von Vorteil, wenn die Polyol-Komponente (A) 5 bis 60 Gew.-%, vorzugsweise 10 bis 50 Gew.-% mindestens eines Polyols, 0,01 bis 5 Gew.-%, vorzugsweise 0,1 bis 4 Gew.-% Wasser als Treibmittel, 0,1 bis 50 Gew.-%, vorzugsweise 0,5 bis 40 Gew.-% mindestens eines polymerisierbaren Vinylmonomers, 0,1 bis 50 Gew.-%, vorzugsweise 0,5 bis 40 Gew.-% mindestens eines Chelatkomplex-bildenden, polymerisierbaren Vinylmonomers, 0,01 bis 10 Gew.-%, vorzugsweise 0.1 bis 5,0 Gew.-% mindestens eines mehrwertigen Metalls in Form des Chlorids bzw. Acetylacetonats im Fall von Chrom, 0,01 bis 10 Gew.-%, vorzugsweise 0,1 bis 5,0 Gew.-% mindestens eines Zellstabilisators und 0 bis 10 Gew.-%, vorzugsweise 0,1 bis 5 Gew.-% mindestens eines Katalysators für die Reaktion des Polyols mit dem Polyisocyanat, und die Polyisocyanat-Komponente (B) 1 bis 50 Gew.-%, vorzugsweise 10 bis 40 Gew.-% mindestens eines Polyisocyanats und 0,01 bis 10 Gew.-%, vorzugsweise 0.1 bis 5 Gew.-% mindestens eines Katalysators für die Polymerisation der Vinylmonomeren, jeweils auf das Gesamtgewicht der Komponenten (A) und (B) bezogen, enthalten, wobei die Gesamtmenge dieser Bestandteile 100 Gew.-% ausmacht.

Die Polyol-Komponente (A) des erfindungsgemäßen Hybridschaumsystems enthält als Katalysator für die Reaktion des Polyols mit dem Polyisocyanat einen üblicherweise für diesen Zweck eingesetzten Katalysator, beispielsweise ein aromatisches und/oder aliphatisches, sekundäres oder tertiäres Amin, eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat dieser Metalle.

Gemäß einer vorteilhaften Ausführungsform der Erfindung enthält die Polyisocyanat-Komponente (B) als Katalysator für die Polymerisation der Vinylmonomeren mindestens einen thermisch aktivierbaren Radikalbildner, vorzugsweise einen gegebenenfalls mit Phthalsäureester, Kreide, Kaolin, Silikonöl, Aliphaten und/oder Weißöl phlegmatisierten Peroxidhärter.

Als Peroxidhärter für das erfindungsgemäße Hybridschaumsystem sind Di-(4-tert.-Butylcyclohexyl)peroxydicarbonat, Dicetylperoxydicarbonat, Dicyclohexylperoxydicarbonat, Dimyristylperoxydicarbonat, tert.-Butylperoxyneodecanoat, tert.-Amylperoxypivalat, Dilauroylperoxid, Dibenzoylperoxid, tert.-Amylperoxy-2-ethylhexanoat, tert.-Butylperoxy-2-ethylhexanoat. Disuccinoylperoxid, tert.-Amylperoxy-2-ethylhexylcarbonat, 1,1-Di-(tert.-butylperoxy)-3,3,5-trimethylcyclohexan. 1,1-Di-(tert.-butylperoxy)cyclohexan, tert.-Butylperoxyisopropylcarbonat, tert.-Butylperoxy-3.5,5-trimethylhexanoat, tert.-Butylperoxy-2-ethylhexylcarbonat, tert.-Butylperoxyacetat, tert.-Amylperoxybenzoat, tert.-Butylperoxybenzoat, 2,2-Di-(tert.-butylperoxy)-butan. Dicumylperoxid, tert.-Butylcumylperoxid. Di-(tert.-amyl)-peroxid. Di-(tert.-butyl)-peroxid, tert.-Butylhydroperoxid. Ammoniumperoxodisulfat, Natriumperoxodisulfat und Kaliumperoxodisulfat oder Gemische davon besonders geeignet, insbesondere mit Phthalat, also Phthalsäureester phlegmatisiertes Dibenzoylperoxid.

Für die Verwendung des erfindungsgemäßen Hybridschaumsystems für Zwecke des Brandschutzes enthält die Polyol-Komponente (A) und/oder die Polyisocyanat-Komponente (B) vorzugsweise ein intumeszierendes Material auf der Grundlage eines Säurebildners, einer Kohlenstoff liefernden Verbindung und eines Gasbildners, Blähgraphit, einen blähfähigen Schichtsilikat und/oder ein zusätzliches organisches oder anorganisches Flammschutzmittel.

Als Flammschutzmittel sind roter Phosphor, eine Phosphorverbindung, insbesondere ein halogenierter Posphorsäureester, wie Trichlorethylphosphat. Tris(2-chlorisopropyl)-phosphat, Triphenylphosphat oder Tris(2-chlorethyl)-phosphat, ein Metallhydroxid, insbesondere Aluminiumhydroxid oder Magnesiumhydroxid. Zinkborat und Ammoniumpolyphosphat, sowie gegebenenfalls Antimonoxid als Synergist besonders bevorzugt.

Weiterhin können sowohl die Polyol-Komponente (A) als auch die Polyisocyanat-Komponente (B) zusätzlich mindestens einen anorganischen Füllstoff enthalten, vorzugsweise ein Metalloxid, ein Borat, ein Carbonat, vorzugsweise Kreide, ein Silikat, Kaolin, Glaspulver, Eisenoxid, Titandioxid, Siliciumdioxid, einen anorganischen Schaum, vorzugsweise geschäumten Blähton, Perlite und Vermiculit, und/oder Hohlkügelchen aus silikatischem Material oder Glas.

Der Polyol-Komponente (A) und/oder die Polyisocyanat-Komponente (B) können zur Einstellung der gewünschten Eigenschaften zusätzlich an sich bekannte Hilfs- und Zusatzstoffe, Stabilisatoren, Weichmacher, Katalysatoren, Thixotropiermittel, Verdünnungs- oder Lösungsmittel und/oder Farbstoffe in üblichen Mengen zugesetzt werden. Als Thixotropiermittel verwendet man vorzugsweise hydrophobe oder hydrophobierte Kieselsäure, während als Verdünnungs- oder Lösemittel aliphatische Alkohole, wie Butanol, bevorzugt sind.

Gemäß eine bevorzugten Ausführungsform des erfindungsgemäßen Zweikomponenten-Polyurethan/Vinylester-Hybridschaumsystems sind die Polyol-Komponente (A) und die Polyisocyanat-Komponente (B) in einer Zwei- oder Mehrkammervorrichtung reaktionsinhibierend voneinander getrennt und unter Anwendungsbedingungen zur Reaktion bringbar enthalten. Dabei sind die Polyol-Komponente (A) und die Polyisocyanat-Komponente (B) vorzugsweise in solchen Mengen enthalten, daß sich bei der bestimmungsgemäßen Verwendung eine NCO:OH-Verhältnis von größer als 1:1 1 ergibt.

Aufgrund der erfindungsgemäß in einfacher Weise gezielt einstellbaren Härte des Hybridschaums, eignet sich das erfindungsgemäße Zweikomponenten-Polyurethan/Vinylester-Hybridschaumsystem besonders für die Verwendung als Flammschutzmaterial und Material zum Ausschäumen von Öffnungen. Kabel-und Rohrdurchführungen in Wänden. Böden und/oder Decken von Gebäuden zum Zwecke des Brandschutzes sowie als Konstruktionsschaum und Bauschaum insbesondere auf Baustellen zur Einpassung und Fixierung von Fenstern, Türen, Fassadenelementen und dergleichen.

Die folgenden Beispiele dienen der weiteren Erläuterung der Erfindung.

### BEISPIEL 1 (erfindungsgemäß)

Bildung eines Hybridschaumsystems unter Verwendung von dreiwertigem Eisen als mehrwertiges Metall.
**Polyol-Komponente (A):**
   (1) Polyol: 29.3 Gew.-% Polyethylenglykol (Pluriol E 600)
   (2) Treibmittel: 0.6 Gew.-% Wasser
   (3) Zellstabilisator: 1,0 Gew.-% eines Siliconcopolymers (DABCO DC 193)
   (4) Katalysator für die Reaktion
      des Polyols mit dem Polyisocyanat: 0.6 Gew.-% einer Mischung aus 70% Bis(2-dimethylaminoethyl)ether und 30% Dipropylengylkol (Jeffcat ZF-22)
   (5) Vinylester: 2,9 Gew.-% Hydroxypropylmethacrylat
   (6) Vinylester: 7,3 Gew.-% 1,4-Butandioldimethacrylat
   (7) Vinylester: 7,3 ethoxyliertes (2 EO) Bisphenol-A-dimethacrylat (SR 348L)
   (8) Vinylester: 22,7 Gew.-% Trimethylolpropantrimethacrylat
   (9) Chelatkomplex bildendes Vinylmonomer: 1,0 Gew.-% (2-Acetoacetoxy)-ethylmethacrylat
**Polyisocyanat-Komponente (B):**
   (10) mehrwertiges Metall: 0,01 Gew.-% Eisen(III)-chlorid
   (11) Polyisocyanat: 26,3 Gew.-% eines Prepolymers auf Basis
      4,4'-Methylenbis(phenylisocyanat) (Voranate M 220)
   (12) thermisch aktivierbarer Radikalbildner: 1.0 Gew.-% mit Phthalat phlegmatisiertes Dibenzoylperoxid (BP-50-FT)

### BEISPIEL 2 (Vergleichsbeispiel)

### Bildung eines Hybridschaumsystems ohne mehrwertiges Metall

Man bereitet eine Polyol-Komponente (A) und eine Polyisocyanat-Komponente (B) auf der Grundlage der folgenden Bestandteile:
**Polyol-Komponente (A):**
   (1) Polyol: 29,3 Gew.-% Polyethylenglykol (Pluriol E 600)
   (2) Treibmittel: 0.6 Gew.-% Wasser
   (3) Zellstabilisator: 1,0 Gew.-% eines Siliconcopolymers (DABCO DC 193)
   (4) Katalysator für die Reaktion
      des Polyols mit dem Polyisocyanat: 0,6 Gew.-% einer Mischung aus 70% Bis(2-dimethylaminoethyl)ether und 30% Dipropylengylkol (Jeffcat ZF-22)
   (5) Vinylester: 2,9 Gew.-% Hydroxypropylmethacrylat
   (6) Vinylester: 7,3 Gew.-% 1,4-Butandioldimethacrylat
   (7) Vinylester: 7,3 ethoxyliertes (2 EO) Bisphenol-A-dimethacrylat (SR 348L)
   (8) Vinylester: 22,7 Gew.-% Trimethylolpropantrimethacrylat
   (9) Chelatkomplex bildendes Vinylmonomer: 1,0 Gew.-% (2-Acetoacetoxy)-ethylmethacrylat
**Polyisocyanat-Komponente (B):**
   (10) Polyisocyanat: 26,3 Gew.-% eines Prepolymers auf Basis
      4,4'-Methylenbis(phenylisocyanat) (Voranate M 220)
   (11) thermisch aktivierbarer Radikalbildner: 1,0 Gew.-% mit Phthalat phlegmatisiertes Dibenzoylperoxid (BP-50-FT)

Man vermischt jeweils die Bestandteile (1) bis (9) zur Bildung der Polyol-Komponente (A) und die Bestandteile (10) bis (12) zur Bildung der Polyisocyanat-Komponente (B), die in getrennte Kammern einer Zweikammervorrichtung reaktionsinhibierend eingebracht werden. Für die bestimmungsgemäße Verwendung werden die Polyolkomponente mit der Polyurethan-Komponente vermischt, wodurch eine exotherme Polyurethan-Bildungsreaktion unter Schaumentwicklung erfolgt. Beim Erreichen der Aktivierungstemperatur des thermisch aktivierbaren Radikalbildners erfolgt dann die radikalische Polymerisation der Vinylmonomeren unter Bildung eines Hybridschaumsystems ohne die Verwendung des mehrwertigen Metalls.

Die Herstellung der Polyol-Komponente (A) und der Polyisocyanat-Komponente (B) erfolgt wie in Beispiel 1 beschrieben unter Verwendung der angegebenen Bestandteile (1) bis (11).

Das Aufschäumen und Aushärten des Hybridschaumsystems erfolgt ebenso wie bei Beispiel 1 durch Vermischen der Polyol-Komponente (A) mit der Polyisocyanat-Komponente (B).

Zur Bestimmung der Druckfestigkeit der gemäß Beispiel 1 und 2 erhaltenen Hybridschäume in Gegenwart und in Abwesenheit von Eisen(III)-chlorid erfolgte im Druckversuch mit Hilfe einer Werkstoffprüfmaschine (Zwick/Roell Z050). Hierzu wurden aus dem Zentrum der nach den Beispielen 1 und 2 hergestellten Hybridschäume zylindrische Probekörper (Durchmesser: 27 mm, Höhe: 33 mm) mit Hilfe einer Lochsäge ausgesägt. Die Prüfkörper wurden in der Werkstoffprüfmaschine auf Anlage eingelegt und mit den an eine Kraftmeßdose gekoppelten Stempel mit konstanter Vorschubgeschwindigkeit zusammengedrückt. Aus den resultierenden Kraft/Weg-Diägrammen lassen sich die Druckfestigkeiten der einzelnen Prüfkörper bestimmen. Zur Ermittlung der Druckfestigkeit wurde der Mittelwert aus 4 Prüfkörpern bestimmt.

Hierbei hat sich gezeigt, daß die Druckfestigkeit des mit dem erfindungsgemäßen Hybridschaumsystem gebildeten Hybridschaums 0,138 ± 0,012 N mm⁻² beträgt, während der nach dem Beispiel 2 hergestellte Vergleichs-Hybridschaum ohne die Anwendung von Eisen(III)-chlorid lediglich eine Druckfestigkeit von 0,043 ± 0,003 N mm⁻² aufweist.

Damit ist ersichtlich, daß es erfindungsgemäß möglich ist, durch die Anwesenheit von Eisen(III)-chlorid in einer sehr geringen Menge die Härte des Hybridschaums um den Faktor 3 zu erhöhen.

Nach der Lehre der vorliegenden Erfindung ist es also in unerwarteter Weise möglich, die Härte des mit dem beanspruchten Hybridschaumsystem hergestellten Hybridschaums gezielt auf die gewünschten Werte einzustellen, lediglich mit dem Zusatz eines mehrwertigen Metalls, wobei der Härtegrad in Abhängigkeit von der zugesetzten Menge des mehrwertigen Metalls gesteuert werden kann.

## Patentansprüche

1. Zweikomponenten-Polyurethan/Vinylester-Hybridschaumsystem mit einer Polyol-Komponente (A), die mindestens ein Polyol, einen Katalysator für die Reaktion des Polyols mit dem Polyisocyanat, mindesten ein polymerisierbares Vinylmonomer, Wasser oder ein Treibmittel auf der Grundlage eines verdichteten oder verflüssigten Gases als Schaumbildner enthält, und einer Polyisocyanat-Komponente (B), die mindestens ein Polyisocyanat und einen Katalysator für die Polymerisation des Vinylmonomers enthält, **dadurch gekennzeichnet, daß** die Polyol-Komponente (A) mindestens eine Verbindung eines mehrwertigen Metalls und mindestens ein mit dem mehrwertigen Metall einen Chelatkomplex bildendes, polymerisierbares Vinylmonomer enthält.

2. Zweikomponenten-Polyurethan/Vinylester-Hybridschaumsystem nach Anspruch 1, **dadurch gekennzeichnet, daß** es mindestens ein mit dem mehrwertigen Metall einen mindestens dreizähnigen Chelatkomplex bildendes, polymerisierbares Vinylmonomer enthält.

3. Zweikomponenten-Polyurethan/Vinylester-Hybridschaumsystem nach Anspruch 1 oder 2, **dadurch gekennzeichnet, daß** es das mit dem mehrwertigen Metall einen Chelatkomplex bildende, polymerisierbare Vinylmonomer in einer Menge von 0,1 bis 50 Gew.-%, vorzugsweise 0,5 bis 40 Gew.-%, bezogen auf das Gesamtgewicht der Komponenten (A) und (B), und das mehrwertige Metall in zur Bildung des Chelatkomplexes äquimolaren Menge enthält.

4. Zweikomponenten-Polyurethan/Vinylester-Hybridschaumsystem nach Anspruch 1 oder 2, **dadurch gekennzeichnet, daß** es als den Chelatkomplex bildendes polymerisierbares Monomer (2-Acetoacetoxy)-ethylmethylacrylat enthält.

5. Zweikomponenten-Polyurethan/Vinylester-Hybridschaumsystem nach den Ansprüchen 1 bis 3, **dadurch gekennzeichnet, daß** es als mehrwertiges Metall ein dreiwertiges Metall enthält, welches sechsfach (oktaedrisch) koordiniert werden kann.

6. Zweikomponenten-Polyurethan/Vinylester-Hybridschaumsystem nach Anspruch 5, **dadurch gekennzeichnet, daß** es als mehrwertiges Metall dreiwertiges Eisen Fe(III), Aluminium Al(III), Chrom Cr(III), Cobalt Co(III) und/oder Ruthenium Ru(III) enthält.

7. Zweikomponenten-Polyurethan/Vinylester-Hybridschaumsystem nach Anspruch 6, **dadurch gekennzeichnet, daß** es das dreiwertige Metall in Form von zugegebenem FeCl₃, AlCl₃, CrCl₃, Co(III)-acetylacetonat und/oder RuCl₃ enthält.

8. Zweikomponenten-Polyurethan/Vinylester-Hybridschaumsystem nach Anspruch 3, **dadurch gekennzeichnet, daß** es den Chelatkomplex der Formel: 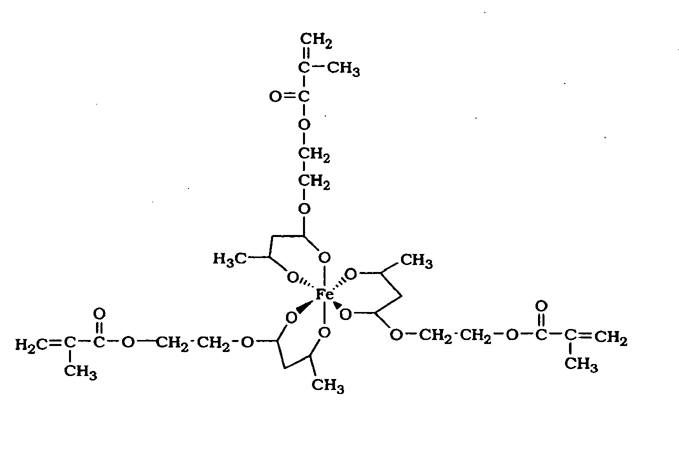 enthält.

9. Zweikomponenten-Polyurethan/Vinylester-Hybridschaumsystem nach mindestens einem der Ansprüche 1 bis 8, **dadurch gekennzeichnet, daß** es als polymerisierbares Vinylmonomer einen Vinylester ausgewählt aus der Alkyl(meth)acrylate, Aryl(meth)acrylate, Hydroxyalkyl(meth)acrylate, (Meth)-acrylamide, Ether-(meth)acrylate, mehrfunktionelle vernetzende (Meth)acrylate, Vinylesterurethanharze, alkoxylierte Bisphenol-A-di(meth)acrylate, alkoxy-, lierte Bisphenol-F-di(meth)acrylate, (Meth)acrylsäure, (Meth)acrylsäureanhydrid und (Meth)acrylnitril umfassenden Gruppe enthält.

10. Zweikomponenten-Polyurethan/Vinylester-Hybridschaumsystem nach Anspruch 9, **dadurch gekennzeichnet, daß** sie als Vinylester mindestens einen Vertreter der Methyl(meth)acrylat, Ethyl(meth)acrylat, n-Butyl(meth)acrylat, Isobutyl(meth)acrylat, n-Hexyl(meth)acrylat, 2-Ethylhexyl(meth)acrylat, Isodecyl(meth)-acrylat, Cyclohexyl(meth)acrylat, Isobornyl(meth)acrylat, Benzyl(meth)acrylat, 3,3,5-Trimethylcyclohexyl(meth)acrylat, Isotridecyl(meth)acrylat, Stearyl-(meth)acrylat, 2-Hydroxyethyl(meth)acrylat, Hydroxypropyl(meth)acrylat, 2-Dimethylaminoethylmethacrylat, 3-Dimethylaminopropyl(meth)acrylamid, 2-Trimethylammoniumethyl(meth)acrylatchlorid, 3-Trimethylammoniumpropyl(meth)acrylamidchlorid, 2-tert.-Butylaminoethyl(meth)acrylat, (Meth)acrylamid, N-Methylol(meth)acrylamid, N-Butoxymethyl(meth)acrylamid, Ethyltriglykol(meth)acrylat. Tetrahydrofurfuryl(meth)acrylat, Methoxypolyethylenglykol-350-(meth)acrylat, Methoxypolyethylenglykol-500-(meth-acrylat, Methoxypolyethylenglykol-750-(meth)acrylat, Methoxypolyethylenglykol-1000-(meth)acrylat, (Meth)acrylsäureester ethoxylierter (25 mol EO) C₁₆ - C₁₈-Fettalkoholgemische, Butyldiglykol(meth)acrylat, Allyl(meth)acrylat, Ethylenglykoldi(meth)acrylat, Diethylenglykoldi(meth)acrylat, Triethylenglykoldi(meth)-acrylat, Tetraethylenglykoldi(meth)acrylat, Polyethylenglykol-200-di(meth)-acrylat, Polyethylenglykol-400-di(meth)acrylat, Polyethylenglykol-600-di(meth)acrylat, Polyethylenglykol-1000-di(meth)acrylat, 1,3-Butandioldi-(meth)acrylat, 1,4-Butandioldi(meth)acrylat, 1,6-Hexandioldi(meth)acrylat. 1,12-Dodecanidioldi(meth)acrylat, Glycerindi(meth)acrylat, Trimethylolpropantri(meth)-acrylat, Diurethandi(meth)acrylat, Umsetzungsprodukte aus polyfunktionellem Isocyanat, gegebenenfalls mehrwertigem Alkohol und/oder gegebenenfalls mehrwertigem Amin und einem Hydroxylalkyl(meth)acrylat, ethoxyliertes (2 EO) Bisphenol-A-di(meth)acrylat, ethoxyliertes (10 EO) Bisphenol-A-di(meth)acrylat, (Meth)acrylsäure, (Meth)acrylsäureanhydrid, Maleinsäure-mono-2-(meth)acryloyloxyethylester, N-(2-(Meth)acryloyloxyethyl)-ethylenharnstoff, N-(2-(Meth)acryloyloxyethyl)-ethylenharnstoff umfassenden Gruppe enthält.

11. Zweikomponenten-Polyurethan/Vinylester-Hybridschaumsystem nach mindestens einem der vorhergehenden Ansprüche, **dadurch gekennzeichnet, daß** die Polyol-Komponente (A) 5 bis 60 Gew.-%, vorzugsweise 10 bis 50 Gew.-% mindestens eines Polyols, 0,01 bis 5 Gew.-%, vorzugsweise 0,1 bis 4 Gew.-% Wasser als Treibmittel, 0.1 bis 50 Gew.-%, vorzugsweise 0,5 bis 40 Gew.-% mindestens eines polymerisierbaren Vinylmonomers, 0,1 bis 50 Gew.-%, vorzugsweise 0,5 bis 40 Gew.-% mindestens eines Chelatkomplex-bildenden, polymerisierbaren Vinylmonomers, 0.01 bis 10 Gew.-%, vorzugsweise 0.1 bis 5,0 Gew.-% mindestens eines mehrwertigen Metalls in Form des Chlorids bzw. Acetylacetonats im Fall von Chrom, 0.01 bis 10 Gew.-%, vorzugsweise 0.1 bis 5,0 Gew.-% mindestens eines Zellstabilisators und 0 bis 10 Gew.-%, vorzugsweise 0,1 bis 5 Gew.-% mindestens eines Katalysators für die Reaktion des Polyols mit dem Polyisocyanat, und die Polyisocyanat-Komponente (B) 1 bis 50 Gew.-%, vorzugsweise 10 bis 40 Gew.-% mindestens eines Polyisocyanats und 0,01 bis 10 Gew.-%, vorzugsweise 0,1 bis 5 Gew.-% mindestens eines Katalysators für die Polymerisation der Vinylmonomeren, jeweils auf das Gesamtgewicht der Komponenten (A) und (B) bezogen, enthält, wobei die Gesamtmenge dieser Bestandteile 100 Gew.-% ausmacht.

12. Zweikomponenten-Hybridschaumsystem nach mindestens einem der vorhergehenden Ansprüche, **dadurch gekennzeichnet, daß** die Polyol-Komponente (A) als Katalysator für die Reaktion des Polyols mit dem Polyisocyanat ein aromatisches und/oder aliphatisches sekundäres oder tertiäres Amin, eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat dieser Metalle enthält.

13. Zweikomponenten-Hybridschaumsystem nach mindestens einem der vorhergehenden Ansprüche, **dadurch gekennzeichnet, daß** die Polyisocyanat-Komponente (B) als Katalysator für die Polymerisation der Vinylmonomeren mindestens einen thermisch aktivierbaren Radikalbildner enthält.

14. Zweikomponenten-Hybridschaumsystem nach Anspruch 13, **dadurch gekennzeichnet, daß** es als thermisch aktivierbaren Radikalbildner für die Polymerisation der Vinylmonomeren einen gegebenenfalls mit Phthalsäureester, Kreide, Kaolin, Silikonöl, Aliphaten und/oder Weißöl phlegmatisierten Peroxidhärter enthält.

15. Zweikomponenten-Hybridschaumsystem nach Anspruch 14, **dadurch gekennzeichnet, daß** es als Peroxidhärter mindesten einen Vertreter der Di-(4-tert.-Butylcyclohexyl)peroxydicarbonat, Dicetylperoxydicarbonat. Dicyclohexylperoxydicarbonat, Dimyristylperoxydicarbonat, tert.-Butylperoxyneodecanoat, tert.-Amylperoxypivalat, Dilauroylperoxid. Dibenzoylperoxid, tert.-Amylperoxy-2-ethylhexanoat, tert.-Butylperoxy-2-ethylhexanoat, Disuccinoylperoxid, tert.-Amylperoxy-2-ethylhexylcarbonat, 1,1-Di-(tert.-butylperoxy)-3,3,5-trimethylcyclohexan, 1,1-Di-(tert.-butylperoxy)cyclohexan, tert.-Butylperoxyisopropylcarbonat, tert.-Butylperoxy-3,5,5-trimethylhexanoat, tert.-Butylperoxy-2-ethylhexylcarbonat, tert.-Butylperoxyacetat, tert.-Amylperoxybenzoat, tert.-Butylperoxybenzoat, 2,2-Di-(tert.-butylperoxy)-butan, Dicumylperoxid, tert.-Butylcumylperoxid, Di-(tert.-amyl)-peroxid. Di-(tert.-butyl)-peroxid, tert.-Butylhydroperoxid. Ammoniumperoxodisulfat, Natriumperoxodisulfat und Kaliumperoxodisulfat umfassenden Gruppe, vorzugsweise mit Phthalat phlegmatisiertes Dibenzoylperoxid enthält.

16. Zweikomponenten-Hybridschaumsystem nach mindestens einem der vorhergehenden Ansprüche, **dadurch gekennzeichnet, daß** die Polyol-Komponente (A) und/oder die Polyisocyanat-Komponente (B) mindestens ein intumeszierendes Material auf der Grundlage eines Säurebildners, einer Kohlenstoff liefernden Verbindung und eines Gasbildners, Blähgraphit, einen blähfähigen Schichtsilikat und/oder ein zusätzliches organisches oder anorganisches Flammschutzmittel enthält.

17. Zweikomponenten-Hybridschaumsystem nach Anspruch 16, **dadurch gekennzeichnet, daß** als Flammschutzmittel roter Phosphor, eine Phosphorverbindung, insbesondere ein halogenierter Posphorsäureester, wie Trichlorethylphosphat, Tris(2-chlorisopropyl)-phosphat, Triphenylphosphat oder Tris(2-chlorethyl)-phosphat, ein Metallhydroxid, insbesondere Aluminiumhydroxid oder Magnesiumhydroxid, Zinkborat und Ammoniumpolyphosphat, sowie gegebenenfalls Antimonoxid als Synergist enthalten ist.

18. Zweikomponenten-Hybridschaumsystem nach mindestens einem der vorhergehenden Ansprüche, **dadurch gekennzeichnet, daß** die Polyol-Komponente (A) und/oder die Polyisocyanat-Komponente (B) zusätzlich mindestens einen anorganischen Füllstoff enthält.

19. Zweikomponenten-Hybridschaumsystem nach Anspruch 18, **dadurch gekennzeichnet, daß** es als anorganischen Füllstoff ein Metalloxid, ein Borat, ein Carbonat, vorzugsweise Kreide, ein Silikat. Kaolin, Glaspulver, Eisenoxid, Titandioxid. Siliciumdioxid, einen anorganischen Schaum, vorzugsweise geschäumten Blähton, Perlite und Vermiculit, und/oder Hohlkügelchen aus silikatischem Material oder Glas enthält.

20. Zweikomponenten-Hybridschaumsystem nach mindestens einem der vorhergehenden Ansprüche, **dadurch gekennzeichnet, daß** die Polyol-Komponente (A) und/oder die Polyisocyanat-Komponente (B) zusätzlich an sich bekannte Hilfs- und Zusatzstoffe, Stabilisatoren, Weichmacher, Katalysatoren, Thixotropiermittel. Verdünnungs- oder Lösemittel und/oder Farbstoffe in üblichen Mengen enthält.

21. Zweikomponenten-Hybridschaumsystem nach Anspruch 20, **dadurch gekennzeichnet, daß** als Thixotropiermittel hydrophobe oder hydrophobierte Kieselsäure enthalten ist.

22. Zweikomponenten-Hybridschaumsystem nach Anspruch 20, **dadurch gekennzeichnet, daß** als Verdünnungs- oder Lösemittel ein aliphatischer Alkohol, wie Butanol, enthalten ist.

23. Zweikomponenten-Polyurethan/Vinylester-Hybridschaumsystem nach mindestens einem der vorhergehenden Ansprüche, **dadurch gekennzeichnet, daß** die Polyol-Komponente (A) und die Polyisocyanat-Komponente (B) in einer Zwei- oder Mehrkammervorrichtung reaktionsinhibierend voneinander getrennt und unter Anwendungsbedingungen zur Reaktion bringbar enthalten sind.

24. Verwendung des Zweikomponenten-Polyurethan/Vinylester-Hybridschaumsystems nach mindestens einem der vorhergehenden Ansprüche als Flammschutzmaterial und Material zum Ausschäumen von Öffnungen, Kabel- und Rohrdurchführungen in Wänden. Böden und/oder Decken von Gebäuden zum Zwecke des Brandschutzes.

## Claims

1. A two-component polyurethane/vinyl ester hybrid foam system with a polyol component (A) which contains at least one polyol, a catalyst for the reaction of the polyol with the polyisocyanate, at least one polymerisable vinyl monomer, water or a propellant based on a compressed or liquefied gas as foam former, and with a polyisocyanate component (B) which contains at least one polyisocyanate and a catalyst for polymerisation of the vinyl monomer, **characterised in that** the polyol component (A) contains at least one compound of a polyvalent metal and at least one polymerisable vinyl monomer forming a chelate complex with the polyvalent metal.

2. The two-component polyurethane/vinyl ester hybrid foam system according to Claim 1, **characterised in that** it contains at least one polymerisable vinyl monomer forming an at least tridentate chelate complex with the polyvalent metal.

3. The two-component polyurethane/vinyl ester hybrid foam system according to Claim 1 or 2, **characterised in that** it contains the polymerisable vinyl monomer forming a chelate complex with the polyvalent metal in a quantity of 0.1 to 50% by weight, preferably 0.5 to 40% by weight, related to the total weight of the components (A) and (B) and the polyvalent metal in an equimolar quantity for forming the chelate complex.

4. The two-component polyurethane/vinyl ester hybrid foam system according to Claim 1 or 2, **characterised in that** it contains (2-acetoacetoxy)-ethylmethylacrylate as the polymerisable monomer forming the chelate complex.

5. The two-component polyurethane/vinyl ester hybrid foam system according to Claims 1 to 3, **characterised in that** it contains as the polyvalent metal a tervalent metal which can be coordinated six times (octahedrically).

6. The two-component polyurethane/vinyl ester hybrid foam system according to Claim 5, **characterised in that** it contains as the polyvalent metal tervalent iron Fe(II), aluminium Al(III), chromium Cr(III), cobalt Co(III) and/or ruthenium Ru(III).

7. The two-component polyurethane/vinyl ester hybrid foam system according to Claim 6, **characterised in that** it contains the tervalent metal in the form of added FeCl₃, AlCl₃, CrCl₃, Co(III)-acetylacetonate and/or RuCl₃.

8. The two-component polyurethane/vinyl ester hybrid foam system according to Claim 3, **characterised in that** it contains the chelate complex with the formula:

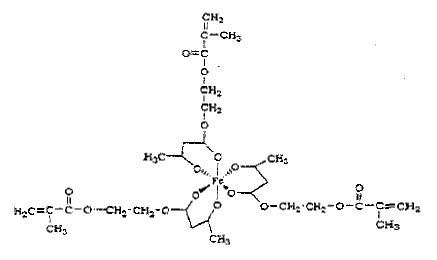

9. The two-component polyurethane/vinyl ester hybrid foam system according to at least one of Claims 1 to 8, **characterised in that** it contains as the polymerisable vinyl monomer a vinyl ester selected from the group comprising alkyl(meth)acrylates, aryl(meth)acrylates, hydroxyalkyl(meth)acrylates, (meth)-acrylamides, ether-(meth)acrylates, multifunctional crosslinking (meth)acrylates, vinylesterurethane resins, alkoxylated bisphenol-A-di(meth)acrylates, alkoxylated bisphenol-F-di(meth)acrylates, (meth)acrylic acid, (meth)acrylic acid anhydride and (meth)acryl nitrile.

10. The two-component polyurethane/vinyl ester hybrid foam system according to Claim 9, **characterised in that** it contains as the vinyl ester at least one representative of the group comprising methyl(meth)acrylate, ethyl(meth)acrylate, n-butyl(meth)acrylate, isobutyl(meth)acrylate, n-hexyl(meth)acrylate, 2-ethylhexyl(meth)acrylate, isodecyl(meth)acrylate, cyclonexyl(meth)acrylate, isobornyl(meth)acrylate, benzyl(meth)acrylate, 3,3,5-trimethylcyclohexyl(meth)acrylate, isotridecyl(meth)acrylate, stearyl(meth)acrylate, 2-hydroxyethyl(meth)acrylate, hydroxypropyl(meth)acrylate, 2-dimethylaminoethylmethacrylate, 3-dimethylaminopropyl(meth)acrylamide, 2-trimethyloammoniumethyl(meth)acrylate chloride, 3-trimethylamminiumpropyl(meth) acrylamide chloride, 2-tert.-butylaminoethyl(meth)acrylate, (meth)acrylamide, N-methylol(meth)acrylamide, N-butoxymethyl(meth)acrylamide, ethyltriglycol(meth) acrylate, tetrahydrofurfuryl(meth)acrylate, methoxypolyethylene glycol-35-(meth)acrylate, methoxypolyethylene glycol-500-(meth)acrylate, methoxypolyethylene glycol-750-(meth)acrylate, methoxypolyethylene glycol-1000-(meth)acrylate, (meth)acrylic acid ester of ethoxylated (25 mol EO) C₁₆ - C₁₈ fat alcohol mixtures, butyldiglycol(meth)acrylate, allyl(meth)acrylate, ethylene glycoldi(meth)acrylate, diethylene glycoldi(meth)acrylate, triethylene glycoldi(meth)acrylate, tetraethylene glycoldi(meth)acrylate, polyethylene glycol-200-di(meth)acrylate, polyethylene glycol-400-di(meth)acrylate, polyethylene glycol-600-di(meth)acrylate, polyethylene glycol-1000-di(meth)acrylate, 1,3-butane dioldi(meth)acrylate, 1,4-butane dioldi(meth)acrylate, 1,6-hexane dioldi(meth) acrylate, 1,12-dodecane dioldi(meth)acrylate, glycerine di(meth)acrylate, trimethylol propane tri(meth)acrylate, diurethane di(meth)acrylate, products of conversion from polyfunctional isocyanate, if necessary polyvalent alcohol and/or, if necessary, polyvalent amine and a hydroxylalkyl(meth)acrylate, ethoxylated (2 EO) bisphenol-A-di(meth) acrylate , ethoxylated (10 EO) bisphenol-A-di(meth)acrylate, (methacrylic acid, (meth)acrylic acid anhydride, maleic acid-mono-2-(meth)acryloyloxyethylester, N-(2)-(meth)acryloyloxyethyl)-ethylene urea and N-(2-(meth)acryloyloxyethyl)-ethylene urea.

11. The two-component polyurethane/vinyl ester hybrid foam system according to at least one of the preceding claims, **characterised in that** the polyol component (A) contains 5 to 60 % by weight, preferably 10 to 50% by weight of at least one polyol, 0.01 to 5% by weight, preferably 0.1 to 4% by weight of water as propellant, 0.1 to 50% by weight, preferably 0,5 to 40% by weight of at least one polymerisable vinyl monomer, 0.1 to 50% by weight, preferably 0.5 to 40% by weight of at least one chelate complex forming polymerisable vinyl monomer, 0.01 to 10% by weight, preferably 0.1 to 5.0%, by weight of at least one polyvalent metal in the form of the chloride or acetylacetonate n the case of chromium, 0.1 to 10% by weight, preferably 0.1 to 5.0% by weight of at least one cell stabiliser and 0 to 10% by weight, preferably 0.1 to 5% by weight of at leas one catalyst for the reaction of the polyol with the polyisocyanate, and **in that** the polyisocyanate component (B) contains 1 to 50 % by weight, preferably 0.1 to 5% by weight, of at least one catalyst for polymerisation of the vinyl monomers, related in each case to the total weight of the components (A) and (B), wherein the total quantity of these components is equal to 100 % by weight.

12. The two-component hybrid foam system according to at least one of the preceding claims, **characterised in that** the polyol component (A) contains, as a catalyst for the reaction of the polyol with the polyisocyanate, an aromatic and/or aliphatic secondary or tertiary amine, a metal organic compound of a metal from the group composing Zn, Sn, Mn, Mg, Bi, Sb, Pb and Ca, in particular an octoate, naphthenate or acety acetonate of these metals.

13. The two-component hybrid foam system according to at least one of the preceding claims, **characterised in that** the polyisocyanate component (B) contains at least one radical former that can be thermally activated as the catalyst for polymerisation of the vinyl monomers.

14. The two-component hybrid foam system according to Claim 13, **characterised in that** it contains, as a radical former that can be thermally activated for polymerization of the vinyl monomers, a peroxide hardener phlegmatised if necessary with phthalic acid ester, chalk, kaolin, silicon oil, aliphatics and/or white mineral oil.

15. The two-component hybrid foam system according to Claim 14, **characterised in that** it contains as peroxide hardener at least one representative of the group comprising di(4-tert.-butylcyclohexyl)peroxydicarbonate, dicetylperoxydicarbonate, dicyclohexylperoxydicarbonate, dimyristylperoxydicarbonate, tert.-butylperoxyneodecanoate, tert.-amylperoxypivalate, dilauroylperoxide, dibenzoylperoxide, tert.-amylperoxy 2-ethylhexanoate, tert.-butylperoxy-2-ethylhexanoate, disuccinoyl peroxide, tert.-amylperoxy-2-ethylhexylcarbonate, 1,1-di-(tert.-butylperoxyl-3,3,5-trimethylcyclohexane, 1,1-di-(tert.-butylperoxy)cyclohexane, tert.-butylperoxyisopropyloarbonate, tert.-butylperoxy-3,5,5-trimethylhexanoate, tert.-butylperoxy-2-ethylhexylcarbonate, tert.-butylperoxyacetate, tert.-amylperoxybenzoate, tert.-butylperoxybenzoate, 2,2-di-(tert.-butylperoxyl)-butane, dicumylperoxide, tert.-butylcumylperoxide, di-(tert.-amyl)-peroxide, di-(tert.-butyl)-peroxide, tert.-butylhydroperoxide, ammonium peroxodisulphate, sodium peroxodisulphate and potassium peroxodisulphate, preferably dibenzoyl peroxide phlegmatised with phthalate.

16. The two-component hybrid foam system according to at least one of he preceding claims, **characterised in that** the polyol component (A) and /or the polyisocyanate component (B) contains at least one intumescent material based on an acid former, a compound supplying carbon and a gas former, expanded graphite, an expandable silicate additive layer and/or an additional organic or inorganic flame retardant.

17. The two-component hybrid foam system according to Claim 16, **characterised in that** it contains, as a flame retardant, red phosphorus, a phosphorus compound, in particular a halogenated phosphoric acid ester such as trichloroethylphosphate, tris(2-chloroisopropyl)-phosphate, triphenyl phosphate or tris(2-chloroethyl)-phosphate, a metal hydroxide, in particular aluminium hydroxide or magnesium hydroxide, zinc borate and ammonium polyphosphate, as well as antimony oxide as a synergist if necessary.

18. The two-component hybrid foam system according to at least one of the preceding claims, **characterised in that** the polyol component (A) and/or the polyisocyanate component (B) additionally contains at least one inorganic filler.

19. The two-component hybrid foam system according to Claim 18, **characterised in that** it contains, as an inorganic filler, a metal oxide, a borate, a carbonate, preferably chalk, a silicate, kaolin, glass powder, iron oxide, titanium dioxide, silicon dioxide, an inorganic foam, preferably foamed expanded clay, perlite and vermiculite, and/or hollow balls of silicatic material or glass.

20. The two-component hybrid foam system according to at least one of the preceding claims, **characterised in that** the polyol component (A) and/or the polyisocyanate component (B) also contains intrinsically known aids and additives, stabilisers, softeners, catalysts, thixotroping agents, diluents or solvents and/or dyes in normal quantities.

21. The two-component hybrid foam system according to Claim 20, **characterised in that** hydrophobic or hydrophobed silicic acid is contained as the thixotroping agent.

22. The two-component hybrid foam system according to Claim 20, **characterised in that** an aliphatic alcohol such as butanol is contained as a diluent or solvent.

23. The two-component polyurethane/vinyl ester hybrid foam system according to at least one of the preceding claims, **characterised in that** the polyol compone it (A) and the polyisocyanate component (B) are separated from each other in a reaction inhibiting manner in a two- or multi-chamber device, and can be brought to the reaction under application conditions.

24. The use of the two-component polyurethane/vinyl ester hybrid foam system according to at least one of the preceding claims as a flame retardant and material for foaming openings, cable and pipe openings in walls, floors and/or ceilings of buildings for the purpose of fire protection.

## Revendications

1. Système de mousse hybride polyuréthanne/ester vinylique à deux composants, ayant un composant polyol (A) qui contient au moins un polyol, un catalyseur pour la réaction du polyol avec le polyisocyanate, au moins un monomère vinylique polymérisable, de l'eau ou un agent gonflant sur la base d'un gaz comprimé ou liquéfié en tant qu'agent moussant, et un composant polyisocyanate (B) qui contient au moins un polyisocyanate et un catalyseur pour la polymérisation du monomère vinylique, **caractérisé en ce que** le composant polyol (A) contient au moins un composé d'un métal multivalent et au moins un monomère vinylique polymérisable, formant un complexe chélaté avec le métal multivalent.

2. Système de mousse hybride polyuréthanne/ester vinylique à deux composants selon la revendication 1, **caractérisé en ce qu'**il contient au moins un monomère vinylique polymérisable, formant au moins un complexe chélaté tridenté avec le métal multivalent.

3. Système de mousse hybride polyuréthanne/ester vinylique à deux composants selon la revendication 1 ou 2, **caractérisé en ce qu'**il contient le monomère vinylique polymérisable, formant un complexe chélaté avec le métal multivalent, dans une quantité de 0,1 à 50 % en poids, de préférence de 0,5 à 40 % en poids, sur la base du poids total des composants (A et (B), et le métal multivalent en quantité équimolaire pour former le complexe chélaté.

4. Système de mousse hybride polyuréthanne/ester vinylique à deux composants selon la revendication 1 ou 2, **caractérisé en ce qu'**il contient le méthacrylate de (2-acétoacétoxy)-éthyle en tant que monomère polymérisable formant le complexe chélaté.

5. Système de mousse hybride polyuréthanne/ester vinylique à deux composants selon les revendications 1 à 3, **caractérisé en ce qu'**il contient un métal trivalent qui peut être coordiné six fois (octaédriquement), en tant que métal multivalent.

6. Système de mousse hybride polyuréthanne/ester vinylique à deux composants selon la revendication 5, **caractérisé en ce qu'**il continent du fer Fe(III), de l'aluminium Al(III), du chrome Cr(III), du cobalt Co(III) et/ou du ruthénium Ru(III) trivalent, en tant que métal multivalent.

7. Système de mousse hybride polyuréthanne/ester vinylique à deux composants selon la revendication 6, **caractérisé en ce qu'**il contient le métal trivalent sous forme de FeCl₃, d'AlCl₃, de CrCl₃, d'acétylacétonate de Co(III) et/ou de RuCl₃ ajouté.

8. Système de mousse hybride polyuréthanne/ester vinylique à deux composants selon la revendication 3, **caractérisé en ce qu'**il contient le complexe chélaté de formule :

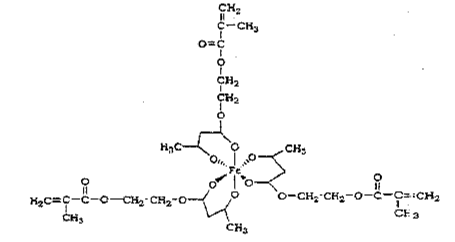

9. Système de mousse hybride polyuréthanne/ester vinylique à deux composants selon au moins une des revendications 1 à 8, **caractérisé en ce qu'**il contient, en tant que monomère vinylique polymérisable, un ester vinylique choisi parmi le groupe constitué de : (méth)acrylates d'alkyle, (méth)acrylates d'aryle, (méth)acrylates d'hydroxyalkyle, (méth)acrylamides, (méth)acrylates d'éther, (méth)acrylates réticulés multifonctionnels, résines de vinylester-uréthanne, di(méth)acrylates de bisphénol A alcoxylés, di(méth)acrylates de bisphénol F alcoxylés, acide (méth)acrylique, anhydride d'acide (méth)acrylique et (méth)acrylonitrile.

10. Système de mousse hybride polyuréthanne/ester vinylique à deux composants selon la revendication 9, **caractérisé en ce qu'**il contient, en tant qu'ester vinylique, au moins un élément représentatif du groupe constitué de : (méth)acrylate de méthyle, (méth)acrylate d'éthyle, (méth)acrylate de n-butyle, (méth)acrylate d'isobutyle, (méth)acrylate de n-hexyle, (méth)acrylate de 2-éthylhexyle, (méth)acrylate d'isodécyle, (méth)acrylate de cyclohexyle, (méth)acrylate d'isobornyle, (méth)acrylate de benzyle, (méth)acrylate de 3,3,5-triméthylcyclohexyle, (méth)acrylate d'isotridécyle, (méth)acrylate de stéaryle, (méth)acrylate de 2-hydroxyéthyle, (méth)acrylate d'hydroxypropyle, (méth)acrylate de 2-diméthylaminoéthyle, (méth)acrylamide de 3-diméthylaminopropyle, (méth)acrylate de chlorure de 2-triméthylammoniométhyle, (méth)acrylamide de chlorure de 3-triméthylammoniopropyle, (méth)acrylate de 2-tert-butylaminoéthyle, (méth)acrylamide, (méth)acrylamide de N-méthylol, (méth)acrylamide de N-butoxyméthyle, (méth)acrylate d'éthyltriglycol, (méth)acrylate de tétrahydrofurfuryle, (méth)acrylate de méthoxypolyéthylèneglycol 350, (méth)acrylate de méthoxypolyéthyléneglycol 500, (méth)acrylate de méthoxypolyéthyléneglycol 750, (méth)acrylate de méthoxypolyéthylèneglycol 1000, mélanges d'alcool gras en C₁₆ à C₁₈ éthoxylés (25 moles EO) et d'ester d'acide (méth)acrylique, (méth)acrylate de butyldiglycol, (méth)acrylate d'allyle, di(méth)acrylate d'éthylèneglycol, di(méth)acrylate de diéthylèneglycol, di(méth)acrylate de triéthylèneglycol, di(méth)acrylate de tétraéthylèneglycol, di(méth)acrylate de polyéthylèneglycol 200, di(méth)acrylate de polyéthylèneglycol 400, di(méth)acrylate de polyéthyléneglycol 600, di(méth)acrylate de polyéthylèneglycol 1000, di(méth)acrylate de 1,3-butanediol, di(méth)acrylate de 1,4-butanediol, di(méth)acrylate de 16-hexanediol, di(méth)acrylate de 1,12-dodécanediol, di(méth)acrylate de glycérine, tri(méth)acrylate de triméthylolpropane, di(méth)acrylate de diuréthanne, produits de réaction d'un isocyanate polyfonctionnel, facultativement d'un alcool polyhydrique et/ou facultativement d'une polyamine et d'un (méth)acrylate d'hydroxyalkyle, di(méth)acrylate de bisphénol A éthoxylé (2 EO), di(méth)acrylate de bisphénol A éthoxylé (10 EO), acide (méth)acrylique, anhydride d'acide (méth)acrylique, ester d'acide maléfique mono-2-(méth)acryloyloxyéthyle, N-(2-(méth)acryloyloxyéthyl)-éthylène urée, N-(2-(méth)acryloyloxyéthyl)-éthylène urée.

11. Système de mousse hybride polyuréthanne/ester vinylique à deux composants selon au moins une des revendications précédentes, **caractérisé en ce que** le composant polyol (A) contient de 5 à 60 % en poids, de préférence 10 à 50 % en poids d'au moins un polyol, 0,01 à 5 % en poids, de préférence 0,1 à 4 % en poids d'eau en tant qu'agent gonflant, 0,1 à 50 % en poids de préférence 0,5 à 40 % en poids d'au moins un monomère vinylique polymérisable, 0,1 à 50 % en poids, de préférence 0,5 à 40 % en poids d'au moins un monomère vinylique polymérisable, formant un complexe chélate, 0,01 à 10 % en poids, de préférence 0,1 à 5 % en poids d'au moins un métal multivalent sous la forme du chlorure ou d'acétylalcétonate dans le cas du chrome, 0,01 à 10 % en poids, de préférence 0,1 à 5 % en poids d'au moins un stabilisant cellulaire et 0 à 10 % en poids, de préférence 0,1 à 5 % en poids d'au moins un catalyseur pour la réaction du polyol avec le polyisocyanate, et le composant polyisocyanate (B) contient de 1 à 50 % en poids, de préférence 10 à 40 % en poids d'au moins un polyisocyanate et 0,01 à 10 % en poids, de préférence 0,1 à 5 % en poids d'au moins un catalyseur pour la polymérisation des monomères vinyliques, respectivement sur la base du poids total des composants (A) et (B), la quantité totale de ces composants représentant 100 % en poids.

12. Système de mousse hybride à deux composants selon au moins une des revendications précédentes, **caractérisé en ce que**, en tant que catalyseur pour la réaction du polyol avec le polyisocyanate, le composant polyol (A) contient une amine secondaire ou tertiaire aromatique et/ou aliphatique, un composé organométallique d'un métal parmi le groupe constitué de Zn, Sn, Mn, Mg, Bi, Sb, Pb et Ca, en particulier un octoate, un naphténate ou un acétylacétonate de ces métaux.

13. Système de mousse hybride à deux composants selon au moins une des revendications précédentes, **caractérisé en ce que** le composant polyisocyanate (B) contient au moins un agent de formation de radicaux thermiquement activable en tant que catalyseur pour la polymérisation du monomère vinylique.

14. Système de mousse hybride à deux composants selon la revendication 13, **caractérisé en ce que**, en tant qu'agent de formation de radicaux thermiquement activable pour la polymérisation des monomères vinyliques, il contient un agent durcissant au peroxyde facultativement rendu inerte avec de l'ester d'acide phthalique, de la craie, du kaolin, de l'huile de silicone, des substances aliphatiques et/ou de l'huile blanche.

15. Système de mousse hybride à deux composants selon la revendication 14, **caractérisé en ce qu'**il contient, en tant qu'agent durcissant, au peroxyde au moins un élément représentatif du groupe constitué le : peroxydicarbonate de di-(4-tert-butylcyclohexyle), péroxydicarbonate de dicétyle, péroxydicarbonate de dicyclohexyle, péroxydicarbonate de dimyristyle, péroxynéodécanoate de tert-butyle, péroxypivalate de tert-amyle, péroxyde de dilauroyle, péroxyde de dibenzoyle, tert-amylpéroxy-2-éthylhexanoate, tert-butylpéroxy-2-éthylhexanoate, péroxyde de disuccinoyle, tert-amylpéroxy-2-éthylhexylcarbonate, 1,1-di-(tert-butypéroxy)-3,3,5-triméthylcyclohexane, 1,1-di-(tert-butylpéroxy)cyclohexane, tert-butylpéroxyisopropylcarbonate, tert-butylpéroxy-3,5,5-triméthylhexanoate, tert-butylpéroxy-2-éthyhexylcarbonate, tert-butylpéroxyacétate, tert-amylpéroxybenzoate, tert-butylpéroxybenzoate, 2,2-di-(tert-butylpéroxy)-butane, péroxyde de dicumyle, péroxyde de tert-butylcumyle, péroxyde de di-(tert-amyle), péroxyde de di-(tert-butyle), hydropéroxyde de tert-butyle, péroxodisulfate d'ammonium, péroxodisulfate de sodium et péroxodisulfate de potassium, de préférence du péroxyde de dibenzoyle rendu inerte avec un phthalate.

16. Système de mousse hybride à deux composants selon au moins une des revendication précédentes, **caractérisé en ce que** le composant polyol (A) et/ou le composant polyisocyanate (B) contient au moins un matériau intumescent basé sur un agent de formation d'acide, un composé produisant du carbone et un agent de formation de gaz, du graphite expansé, un phyllosilicate expansible et/ou un agent ignifuge organique ou inorganique supplémentaire.

17. Système de mousse hybride à deux composants selon la revendication 16, **caractérisé en ce que**, en tant qu'agent ignifuge, du phosphore rouge, un composé phosphoreux, en particulier un ester d'acide phosphorique halogéné, tel que du phosphate de trichloroéthyle, du phosphate de tris(2-chloroisopropyle), du phosphate de tri-phényle ou du phosphate de tris(2-chloroéthyle), un hydroxyde de métal, en particulier un hydroxyde d'aluminium ou un hydroxyde de magnésium, du borate de zinc et du polyphosphate d'ammonium, ainsi que facultativement un oxyde d'antimoine en tant que synergiste.

18. Système de mousse hybride à deux composants selon au moins une des revendications précédentes, **caractérisé en ce que** le composant polyol (A) et/ou le composant polyisocyanate (B) contient en plus au moins une charge inorganique.

19. Système de mousse hybride à deux composants selon la revendication 18, **caractérisé en ce qu'**il contient un oxyde de métal, un borate, un carbonate, de préférence de la craie, un silicate, du kaolin, de la poudre de verre, un oxyde de fer, un oxyde de titane, un dioxyde de silicium, une mousse inorganique, de préférence de l'argile expansée en mousse, de la perlite et de la vermiculite, et/ou de petites sphères creuses en silice ou en verre, en tant que charge inorganique.

20. Système de mousse hybride à deux, composants selon au moins une des revendications précédente, **caractérisé en ce que** le composant polyol (A) et/ou le composant polyisocyanate (B) contient en plus des adjuvants et des additifs connus, des stabilisants, des plastifiants, des catalyseurs, des agents thixotropes, des diluants ou des solvants et/ou des colorants en quantités habituelles.

21. Système de mousse hybride à deux composants selon la revendication 20, **caractérisé en ce que** de l'acide silicique hydrophobe ou hydrophobisé est contenu en tant qu'agent thixotrope.

22. Système de mousse hybride à deux composants selon la revendication 20, **caractérisé en ce qu'**un alcool aliphatique, tel que du butanol, est contenu an tant que diluant ou solvant.

23. Système de mousse hybride polyuréthane/ester vinylique à deux composants selon au moins une des revendications précédentes, **caractérisé en ce que** le composant polyol (A) et le composant polyisocyanate (B) sont séparés l'un de l'autre pour inhiber toute réaction dans un dispositif à deux chambres ou plus, et sont amenés à réagir dans ces conditions d'utilisation.

24. Utilisation du système de mousse hybride polyuréthane/ester vinylique à deux composants selon au moins une des revendications précédentes en tant que matériau ignifuge et matériau pour remplir de mousse des ouvertures, des traversées de câbles et des passages de tuyaux dans des murs, des planchers et/ou des plafonds de bâtiments dans le but d'assurer la protection contre le feu.
